# EUROPEAN PATENT SPECIFICATION

(11) **EP 3 233 361 B1**
(45) Date of publication and mention of the grant of the patent: **08.01.2025**
(21) Application number: 15804698.7
(22) Date of filing: 24.11.2015
(51) Int. Cl.: B23K 26/352

(54) **METHOD FOR MANUFACTURING A HOUSEHOLD APPLIANCE COMPONENT WITH DUAL STRUCTURING OF A SURFACE AS WELL AS HOUSEHOLD APPLIANCE COMPONENT**
VERFAHREN ZUR HERSTELLUNG EINER HAUSHALTSGERÄTEKOMPONENTE MIT DUALER STRUKTURIERUNG EINER OBERFLÄCHE SOWIE HAUSHALTSGERÄTEKOMPONENTE
PROCÉDÉ DE FABRICATION D'UNE PIÈCE D'APPAREIL ÉLECTROMÉNAGER AVEC DOUBLE STRUCTURATION D'UNE SURFACE ET PIÈCE D'APPAREIL ÉLECTROMÉNAGER

(30) Priority: 19.12.2014 ES 201431888
(43) Date of publication of application: 25.10.2017
(73) Proprietor: BSH Hausgeräte GmbH, 81739 München (DE)
(72) Inventor: ARTAL LAHOZ, Maria Carmen, 50007 Zaragoza (ES); BUNUEL MAGDALENA, Miguel Angel, 50017 Zaragoza (ES); ESTER SOLA, Francisco Javier, 50001 Zaragoza (ES); JAGDHEESH, Radhakrishnan, 28031 Madrid (ES); MARTINEZ SOLANAS, Elena, 50015 Zaragoza (ES); OCAÑA MORENO, Jose Luis, 28029 Madrid (ES); OTERO GARCIA, Iñaki, 31610 Villaba (ES); SAN MARTIN SANCHO, Roberto, 31200 Estella (ES); TUR GIL, Alejandro Juan, 28029 Madrid (ES); URRUTIA ANGOS, David, 50009 Zaragoza (ES)
(86) International application number: PCT/EP2015/077402
(87) International publication number: WO 2016/096327

(56) References cited:
- DE-U1- 202008 007 122
- US-A1- 2012 328 905
- US-A1- 2013 138 103
- BARADA K. NAYAK ET AL: "Self-organized micro/nano structures in metal surfaces by ultrafast laser irradiation", OPTICS AND LASERS IN ENGINEERING, vol. 48, no. 10, 1 October 2010 (2010-10-01), pages 940 - 949, XP055090354, ISSN: 0143-8166, DOI: 10.1016/j.optlaseng.2010.04.010

## Description

The invention relates to a method for manufacturing a household appliance component, in which a basic element with a metallic surface is provided. The surface is structured by a laser beam. Moreover, the invention also relates to a household appliance component. Methods for manufacturing most varied household appliance components are widely known. Household appliance components in this connection are for instance facia panels. In particular they can be made of metal therein. In this connection it is also known that by way of direct acting of a laser beam upon a surface of such a metallic component structurings may be effected, in order to generate in this connection for instance symbols, which signal to a user a specific operating program of the household appliance, in which the household appliance component is built in.

Moreover, by way of a laser processing also further information, for instance in the form of letters, can be generated permanently on such a household appliance component.

For the specific surface processing of such a household appliance component it is furthermore also known that an additional coating is applied, in order to protect the household appliance component for instance against scratches or the like. Moreover, also coatings are known, which then have a water-repellent or water pearl producing function. For this purpose, however, additional coatings and thus additional manufacturing effort is required. On the other hand, such components even then can be made entirely of a specific plastic, which however then restricts the options for their use and application in a household appliance considerably.

US2013/138103A discloses an electrosurgical unit comprising a metal blade with micro/nano structured surface produced by laser.

It is the task of the present invention to provide a method as well as a household appliance component, by means of which or by which by a structuring with a laser a functionally improved surface is designed.

This task is solved by a method and a household appliance component according to the independent claims.

In a method for manufacturing a household appliance component according to the invention a basic element of this household appliance component is provided and this in such a way that this basic element at least partly is designed to be made of metal, and thus at least partly comprises a metallic surface. The household appliance component is a fascia panel. The surface is structured by at least one laser beam. An essential idea of the invention is to be seen in that the laser beam generates a macrostructure with a plurality of structure elements on the surface that are arranged spaced apart from each other, wherein the structure elements with dimensions in the micrometer range are produced. In connection areas between the structure elements the metallic surface is processed by the laser beam in such a way that a fine structure dimensioned in contrast to the macrostructure with dimensions in the nanometer range is generated. By this very specific overall structure, which is generated by a laser beam directly on the surface, the functionality of the basic element and thus also of the household appliance component can be raised. In this connection a function of the household appliance component without an additional coating that facilitates this function can be achieved. In particular by this specific structure formation on the surface of the metallic basic element an additional function of the basic element and thus also of the household appliance component is facilitated, by which applied liquid media are specifically caused to form pearls and these media then drip off the correspondingly structured surface.

In an advantageous embodiment the structure elements of the macrostructure are designed as micro channels or micro grooves, which thus are quasi present as longitudinal grooves or ducts. Moreover, the structure elements can also be generated as micro holes, which then quasi only extend into the depth and do not represent any grooves or the like that extend over a certain distance. These various possibilities as to how structure elements can be geometrically designed, can be realized individually or in combination on a metallic surface of the basic element. Individually, thus the given requirements with regard to the realization of this named additional function, which is caused by this structuring of the metallic surface, can be taken into consideration and the functional effect be intensified or attenuated.

By the dual structuring of the surface, which comprises the macrostructure and the fine structure, a hydrophobic surface is generated. This is to be particularly emphasized, since thus liquid media that are applied to the surface through a particularly effective pearl formation can also drip off. Through this specific structuring of the metallic surface alone thus also this functional effect and thus this additional function is achieved, without a hydrophobic coating having to be applied additionally to the surface. This therefore is a considerable advantage over known prior art embodiments, in which circumferential coatings need to be applied to metallic components, in order to be able to present this hydrophobic property.

In an advantageous way thus the hydrophobic surface is generated only by the defined structuring of the metallic surface and without additional hydrophobic coating of the surface.

In an advantageous way the structure elements are generated with a depth of between 3 µm and 15 µm measured perpendicularly to the plane in which the surface extends.

The structure elements are preferably generated with a dimension measured in the plane in which the metallic surface extends, in particular the width at the upper edge of these structure elements, of between 5 µm and 15 µm.

Preferably, the fine structure is generated with a depth and/or a width of between 30 mm and 100 mm.

By these specific indications of measurements of the structure elements in the micrometer range and of the fine structure in the nanometer range precisely for the hydrophobic functionality of the surfaces designed and structured in this way a particularly hydrophobic effect is achieved.

Preferably the surface is provided to be made of aluminium. This is a very light metal so that the basic element and also the household appliance component therefore can be provided with a minimum weight. Moreover, this material can be processed in an advantageous way by the laser beam to facilitate in this very connection the designing of the dual structuring from a macrostructure in the micrometer range and a fine structure in the nanometer range in a defined and precise way.

The laser beam is generated with a wavelength in the ultraviolet spectral range.

Moreover, the invention also relates to a household appliance component, which is manufactured by a method according to the invention or an advantageous embodiment thereof. The household appliance component is for instance a fascia panel.

It is to be mentioned that the indications of measurements with regard to the micrometer range and the nanometer range are to be seen in particular with regard to an unprocessed surface and are dimensioned in this regard. In this connection it is therefore essential that the laser beam acts upon an originally unprocessed metallic surface in a defined way in order to, on the one hand, generate the structure elements then in comparison to the unprocessed surface specified in the micrometer range and then in the top sides of connection areas between the structure elements remaining on the surface, which can be generated spaced apart from each other, a further agency of the laser beam is performed to the effect that the fine structure is generated in the nanometer range.

Preferably the laser beam is generated as pulsed laser beam, in particular laser pulses are generated in the nanosecond range or femtosecond range, in order to act upon the surface. Precisely with a laser beam in the wavelength range of the ultraviolet spectral range by such a specific pulsed laser then very precisely the entire structuring on the metallic surface can be generated.

In the following, embodiments of the invention are shown in more detail by referring to schematic drawings. These show in:
- Fig. 1: a perspective representation of a partial section of a structured surface of a manufactured household appliance component;
- Fig. 2: a vertical sectional view through the structuring in Fig. 1;
- Fig. 3: a top view of a first embodiment of a generated structuring on a metallic surface of a household appliance component;
- Fig. 4: a top view of a further embodiment of a specific structuring on a metallic surface of a household appliance component;
- Fig. 5: a top view of a further embodiment of a structuring as it is generated on a metallic surface of a household appliance component; and
- Fig. 6: an exemplary representation of a device by which the structuring of a metallic surface of a basic element of the household appliance component is generated.

In the figures same elements and elements having same functions are equipped with the same reference signs.

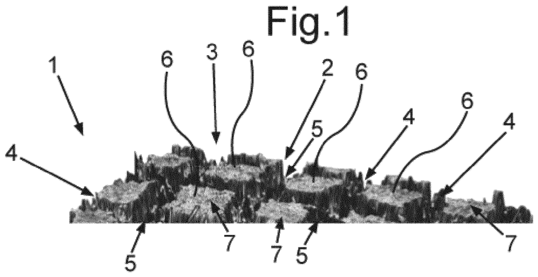

In Fig. 1 in a partial perspective view a household appliance component 1 which is a fascia panel 1 is shown, in which a metallic surface 2 is specifically structured. An overall structure 3 is generated by means of a laser beam in such a way that, on the one hand, a macrostructure 4 with a plurality of structure elements 5 that are arranged spaced apart from each other is generated with dimensions in the micrometer range. In the embodiment the structure elements 5 are designed as micro channels or micro grooves, wherein it is in particular envisaged that the structure elements 5 are designed as straight-lined micro channels or micro ducts, each of which viewed in one direction are designed to extend spaced apart from and in parallel to each other. In the embodiment in Fig. 1 in perpendicular direction thereto further micro channels or micro grooves are designed as structure elements 5, which thus intersect or cross the structure elements 5 extending in the other direction relative thereto.

By this macrostructure 4 moreover tower-like or column-like intermediate elements are created, at the surface of which thus planar connection areas 6 are designed as remaining surface zones of the surfaces 2. These connection areas 6 thus represent the surface area demarcation zones against the structure elements 5. On these connection areas 6 and thus the correspondingly present surface zones of the surface 2 preferably a fine structure 7 is designed in each case, which is generated with dimensions in the nanometer range. For the sake of clarity in Fig. 1 only some of the respectively named components with reference signs 5, 6, and 7 are marked.

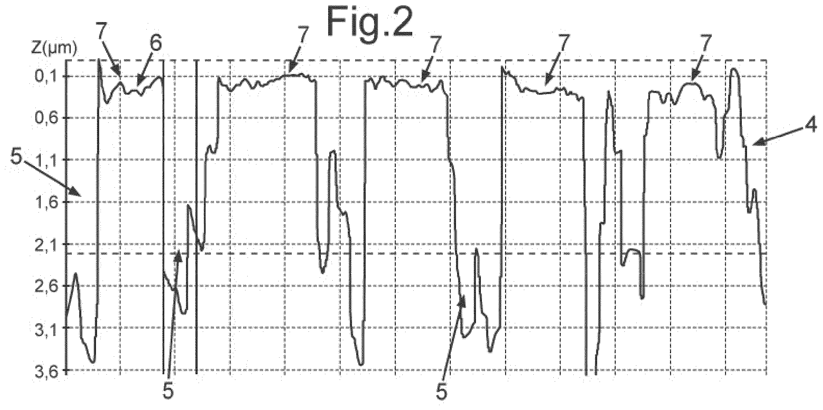

In Fig. 2 a vertical sectional view is shown so that here the entire structuring can be discerned in an exemplary way. Exemplary dimensions for the depth of the micro channels or micro ducts are shown in this connection. Moreover also the dimensions in the nanometer range of the fine structure 7 can be seen.

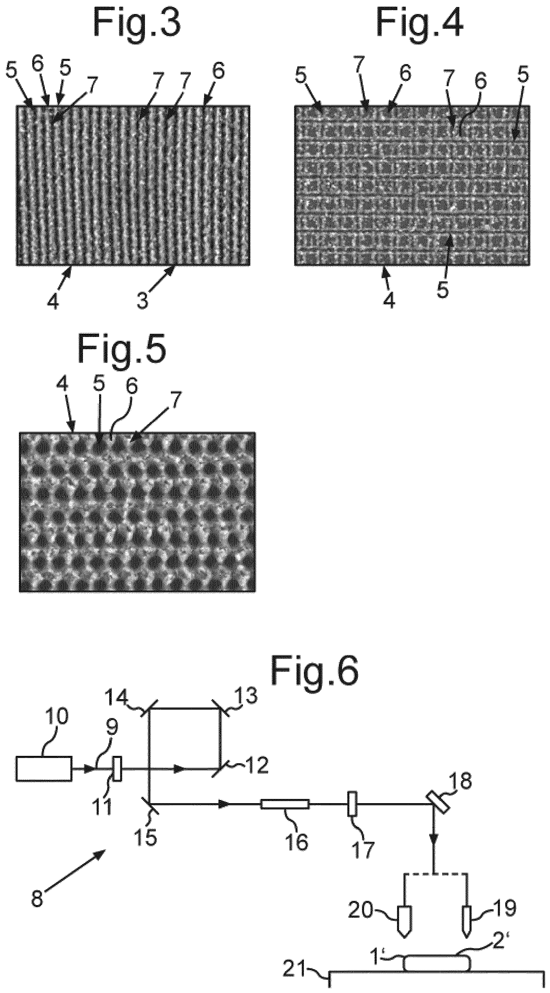

In Fig. 3 a top view of a first embodiment of a specific overall structure 3 of the metallic surface 2 is shown. Here structure elements 5 are designed, which are micro channels or micro ducts. These micro channels or micro ducts are longitudinal grooves, which extend spaced apart from and in parallel to each other. In the embodiment in Fig. 3 in contrast to the explanation as to Fig. 1 and Fig. 2 they are designed only in one direction. Between the micro channels or micro ducts the connection areas 6 are designed with the fine structure 7 generated therein in the nanometer range. Here, too, for the sake of clarity only in some of these structure elements 5 and the fine structure 7 the corresponding reference signs are provided.

In Fig. 4 the embodiment as already set out with regard to Fig. 1 and Fig. 2 is shown in a top view. A corresponding tessellated pattern is to be discerned. Here, too, equally for the sake of clarity only at some points the indication of references has been made.

In Fig. 5 a top view of a further embodiment of an overall structure 3 is shown that is different from the explanations given in Fig. 3 and Fig. 4. In the embodiment in Fig. 5 it is envisaged that the structure elements 5 are designed as micro holes and thus as blind holes. Here, too, in turn, between the structure elements 5 that are arranged spaced apart connection areas 6 are designed, on which the fine structure 7 is generated.

A basic element 1' provided in the embodiments, from which by laser processing and thus by the thereby generated structuring the household appliance component 1 is generated, is preferably made from aluminium, and is then processed by the laser beam, in order to then obtain by the generated structuring also the household appliance component 1 from the basic element 1'.

In Fig. 6 in an exemplary representation a device 8 is shown, by which the basic element 1' is processed at its still unprocessed surface 2', in order to be able to generate the overall structure 3. The laser beam 9, which is generated by a laser 10, has a wavelength in the ultraviolet spectral range. The intensity of the laser beam 9 in this connection is greater than the ablation threshold value of the aluminium material so that thereby also the corresponding structuring can be performed. The laser beam 9 is generated as pulsed laser beam and can preferably be in the nanosecond range or in the femtosecond range.

As can be seen in Fig. 6, and however can be understood only in an exemplary way, the laser beam emitted by the laser 10 is guided through an acoustic-optical modulator 11, in order to obtain the desired frequency. The laser beam 9 is then guided for several mirrors 12, 13, 14, and 15 into a beam expander 16 and from there into an attenuator 17. The laser beam is then focussed via a mirror 18, which is controlled in its movement by a computer, to a fixed optical system 19 or a galvascanner 20. The basic element 1' is attached to a processing desk 21 and can be shifted thereon in all three spatial directions.

For generation of the structure elements with the dimensions in the micrometer range the focussed laser beam, preferably in the range of between 10 µm and 30 nm is directed at the surface 2.

Preferably the laser energy amounts to between 300 mW and 1 W, the pulse repetition rate to between 50 kHz and 200 kHz. The scan rate is preferably between 50 nm/s and 200 nm/s. The beam shifting preferably amounts to between 5 µm and 50 µm and the dot size of the laser beam preferably amounts to 10 µm and 15 µm.

The generated overall structures 3 on the surface 2 then form a superhydrophobic surface, without an additional specific coating with a hydrophobic material being required.

### LIST OF REFERENCES

- 1: household appliance component
- 1': basic element
- 2: surface
- 2': surface
- 3: overall structure
- 4: macrostructure
- 5: structure elements
- 6: connection areas
- 7: fine structure
- 8: device
- 9: laser beam
- 10: laser
- 11: modulator
- 12: mirror
- 13: mirror
- 14: mirror
- 15: mirror
- 16: beam expander
- 17: attenuator
- 18: mirror
- 19: fixed optical system
- 20: galvascanner
- 21: processing table

## Claims

1. A method for manufacturing a household appliance component (1), which is a housing element (1) of a household appliance, in which a basic element (1') with a metallic surface (2') is provided and the surface (2') is structured by a laser beam (9), wherein the laser beam (9) on the surface (2') generates a macrostructure (4) with a plurality of structure elements (5) arranged spaced apart from each other with dimensions in the micrometer range and in connection areas (6) between the structure elements (5) a fine structure (7) with dimensions in the nanometer range is generated by the laser beam (9), wherein by the dual structuring by the structure elements (5) and the fine structure (7) a hydrophobic surface (2) is generated by the laser beam (9) with a wavelength in the ultraviolet spectral range, wherein the household appliance component (1) is a fascia panel (1).

2. The method according to claim 1, **characterized in that** the structure elements (5) are generated as micro channels or micro holes.

3. The method according to any one of the preceding claims, **characterized in that** the hydrophobic surface (2) is generated only by the defined structuring of the metallic surface (2') and without additional hydrophobic coating of the surface (2') is generated.

4. The method according to any one of the preceding claims, **characterized in that** the structure elements (5) are generated with a depth of between 3 µm and 15 µm.

5. The method according to any one of the preceding claims, **characterized in that** the structure elements (5) are generated with a width, in particular at an upper edge of the structure elements (5), of between 5 µm and 15 µm.

6. The method according to any one of the preceding claims, **characterized in that** the fine structure (7) is generated with a depth and/or a width of between 30 nm and 100 nm.

7. The method according to any one of the preceding claims, **characterized in that** the surface (2') is provided made from aluminium.

8. A household appliance component (1) which is a housing element (1) of a household appliance in which a basic element (1') with a metallic surface (2') is provided, wherein the surface (2') is structured by a laser beam (9), wherein the household appliance component (1) is a fascia panel (1), wherein the laser beam (9) on the surface (2') generates a macrostructure (4) with a plurality of structure elements (5) arranged spaced apart from each other with dimensions in the micrometer range and in connection areas (6) between the structure elements (5) a fine structure (7) with dimensions in the nanometer range is generated by the laser beam (9), wherein by the dual structuring by the structure elements (5) and the fine structure (7) a hydrophobic surface (2) is generated by the laser beam (9) with a wavelength in the ultraviolet spectral range.

## Patentansprüche

1. Verfahren zum Herstellen einer Haushaltsgerätekomponente (1), bei der es sich um ein Gehäuseelement (1) eines Haushaltsgeräts handelt, bei dem ein Grundelement (1') mit einer metallischen Oberfläche (2') vorgesehen ist und die Oberfläche (2') mit einem Laserstrahl (9) strukturiert wird, wobei der Laserstrahl (9) auf der Oberfläche (2') eine Makrostruktur (4) mit mehreren Strukturelementen (5) mit Abmessungen im Mikrometerbereich erzeugt, die voneinander beabstandet angeordnet sind, und in Verbindungsbereichen (6) zwischen den Strukturelementen (5) mit dem Laserstrahl (9) eine Feinstruktur (7) mit Abmessungen im Nanometerbereich erzeugt wird, wobei durch das doppelte Strukturieren mit den Strukturelementen (5) und der Feinstruktur (7) von dem Laserstrahl (9) mit einer Wellenlänge im ultravioletten Spektralbereich eine hydrophobe Oberfläche (2) erzeugt wird, wobei es sich bei der Haushaltsgerätekomponente (1) um eine Blende (1) handelt.

2. Verfahren nach Anspruch 1, **dadurch gekennzeichnet, dass** die Strukturelemente (5) als Mikrorinnen oder Mikrolöcher erzeugt werden.

3. Verfahren nach einem der vorhergehenden Ansprüche, **dadurch gekennzeichnet, dass** die hydrophobe Oberfläche (2) nur durch das definierte Strukturieren der metallischen Oberfläche (2') und ohne zusätzliche hydrophobe Beschichtung der Oberfläche (2') erzeugt wird.

4. Verfahren nach einem der vorhergehenden Ansprüche, **dadurch gekennzeichnet, dass** die Strukturelemente (5) mit einer Tiefe zwischen 3 µm und 15 µm erzeugt werden.

5. Verfahren nach einem der vorhergehenden Ansprüche, **dadurch gekennzeichnet, dass** die Strukturelemente (5), insbesondere an einem oberen Rand der Strukturelemente (5), mit einer Breite zwischen 5 µm und 15 µm erzeugt werden.

6. Verfahren nach einem der vorhergehenden Ansprüche, **dadurch gekennzeichnet, dass** die Feinstruktur (7) mit einer Tiefe und/oder einer Breite zwischen 30 nm und 100 nm erzeugt wird.

7. Verfahren nach einem der vorhergehenden Ansprüche, **dadurch gekennzeichnet, dass** die Oberfläche (2') aus Aluminium hergestellt wird.

8. Haushaltsgerätekomponente (1), bei der es sich um ein Gehäuseelement (1) eines Haushaltsgeräts handelt, bei dem ein Grundelement (1') mit einer metallischen Oberfläche (2') vorgesehen ist, wobei die Oberfläche (2') mit einem Laserstrahl (9) strukturiert ist, wobei es sich bei der Haushaltsgerätekomponente (1) um eine Blende (1) handelt, wobei der Laserstrahl (9) auf der Oberfläche (2') eine Makrostruktur (4) mit mehreren Strukturelementen (5) mit Abmessungen im Mikrometerbereich erzeugt, die voneinander beabstandet angeordnet sind, und in Verbindungsbereichen (6) zwischen den Strukturelementen (5) mit dem Laserstrahl (9) eine Feinstruktur (7) mit Abmessungen im Nanometerbereich erzeugt wird, wobei durch das doppelte Strukturieren mit den Strukturelementen (5) und der Feinstruktur (7) von dem Laserstrahl (9) mit einer Wellenlänge im ultravioletten Spektralbereich eine hydrophobe Oberfläche (2) erzeugt wird.

## Revendications

1. Procédé de fabrication d'un élément d'appareil électroménager (1), qui est un élément de carrosserie (1) d'un appareil électroménager, dans lequel un élément de base (1') comprenant une surface métallique (2') est agencé, et la surface (2') est structurée par un faisceau laser (9),
dans lequel le faisceau laser (9) sur la surface (2') génère une macrostructure (4) comprenant une pluralité d'éléments de structure (5) agencés de façon espacée l'un de l'autre avec des dimensions de l'ordre du micromètre et, dans des zones de liaison (6) entre les éléments de structure (5), une structure fine (7) ayant des dimensions de l'ordre du nanomètre est générée par le faisceau laser (9),
dans lequel, par la double structuration par les éléments de structure (5) et la structure fine (7), une surface hydrophobe (2) est générée par le faisceau laser (9) à une longueur d'onde dans le domaine spectral de l'ultraviolet,
dans lequel l'élément d'appareil électroménager (1) est un panneau frontal (1).

2. Procédé selon la revendication 1, **caractérisé en ce que** les éléments de structure (5) sont générés sous forme de micro-canaux ou de micro-trous.

3. Procédé selon l'une quelconque des revendications précédentes, **caractérisé en ce que** la surface hydrophobe (2) est générée uniquement par la structuration définie de la surface métallique (2') et sans revêtement hydrophobe supplémentaire de la surface (2').

4. Procédé selon l'une quelconque des revendications précédentes, **caractérisé en ce que** les éléments de structure (5) sont générés avec une profondeur de 3 µm à 15 µm.

5. Procédé selon l'une quelconque des revendications précédentes, **caractérisé en ce que** les éléments de structure (5) sont générés avec une largeur, en particulier au niveau d'un bord supérieur des éléments de structure (5), entre 5 µm et 15 µm.

6. Procédé selon l'une quelconque des revendications précédentes, **caractérisé en ce que** la structure fine (7) est générée avec une profondeur et/ou une largeur de 30 nm à 100 nm.

7. Procédé selon l'une quelconque des revendications précédentes, **caractérisé en ce que** la surface (2') est constituée d'aluminium.

8. Élément d'appareil électroménager (1), qui est un élément de carrosserie (1) d'un appareil électroménager dans lequel un élément de base (1') comprenant une surface métallique (2') est agencé, dans lequel la surface (2') est structurée par un faisceau laser (9), dans lequel l'élément d'appareil électroménager (1) est un panneau frontal (1),
dans lequel le faisceau laser (9) sur la surface (2') génère une macrostructure (4) comprenant une pluralité d'éléments de structure (5) agencés de façon espacée l'un de l'autre avec des dimensions de l'ordre du micromètre et, dans des zones de liaison (6) entre les éléments de structure (5), une structure fine (7) ayant des dimensions de l'ordre du nanomètre est générée par le faisceau laser (9),
dans lequel, par la double structuration par les éléments de structure (5) et la structure fine (7), une surface hydrophobe (2) est générée par le faisceau laser (9) à une longueur d'onde dans le domaine spectral de l'ultraviolet.
